# EUROPEAN PATENT APPLICATION

(11) **EP 4 460 144 A1**
(43) Date of publication of application: **06.11.2024**
(21) Application number: 24173728.7
(22) Date of filing: 02.05.2024
(51) Int. Cl.: H04W 74/0816, H04W 84/12

(54) **SUB-TRANSMIT OPPORTUNITIES WITHIN TRANSMIT OPPORTUNITIES**

(30) Priority: 04.05.2023 US 202363500241 P; 30.04.2024 US 202418650837
(71) Applicant: Apple Inc., Cupertino, CA 95014 (US)
(72) Inventor: VERMA, Lochan, Danville (US); YONG, Su Khiong, Palo Alto (US); LIU, Yong, Campbell (US); KNECKT, Jarkko L., Los Gatos (US); JIANG, Jinjing, San Jose (US); HEDAYAT, Ahmad Reza, Carlsbad (US); THAKUR, Sidharth R., San Jose (US)
(74) Representative: COPA Copenhagen Patents

(57) **Abstract**

Systems, methods, and mechanisms for a sub-transmit opportunity (sub-TxOP) and/or sub-TxOPs within a transmit opportunity (e.g., TxOP) to reduce channel access delays in wireless systems, e.g., such as in current and future IEEE 802.11 systems. A wireless device (e.g., an access point or wireless station) may transmit, at a start of a TxOP to one or more wireless devices, signaling indicating that the TxOP includes one or more sub-TxOPs. The wireless device may contend, during a first contention period (CP) preceding a first sub-TxOP of the one or more sub-TxOPs, for access to a medium. The wireless device may transmit, upon determining that the wireless device can transmit in the first sub-TxOP, data to at least one wireless device of the one or more wireless devices.

## Description

### FIELD

The present application relates to wireless communications, including techniques for a sub-transmit opportunity (sub-TxOP) within a transmit opportunity (e.g., TxOP) to reduce channel access delays in wireless systems, e.g., such as in current and future IEEE 802.11 systems.

### DESCRIPTION OF THE RELATED ART

In current implementations, a wireless local area network (WLAN) device (e.g., a wireless station) often needs to manage multiple Wi-Fi interfaces. For example, the WLAN device may need to manage an infrastructure Wi-Fi connection with an access point and a Wi-Fi peer-to-peer (P2P) connection with another WLAN device. Both of these connections may be on the same link. As another example, the WLAN device may need to manage coexistence between radio access technologies such Wi-Fi and Bluetooth. In addition, radio resources within the WLAN device are time shared by the infrastructure Wi-Fi connection, the P2P connection, and any co-existing radio access technologies. Given that the WLAN device dynamically time shares the radio resources between the various competing elements, communications may collide leading to a reduction in transmission rate which may not be suitable based on the reasons for failed transmissions and, as such, the transmission rate reduction may be undesirable.

In addition, in current implementations, there may be a channel access delay due to medium contention. Thus, the WLAN device may have data (or a data packet) to transmit, but may not be able to access the medium due to reservation/activity on the medium by another device and/or other devices. Such a channel access delay may lead to latency issues that may be undesirable. Therefore, improvements are desired.

### SUMMARY

Embodiments described herein relate to systems, methods, and mechanisms for a sub-transmit opportunity (sub-TxOP) and/or sub-TxOPs within a transmit opportunity (e.g., TxOP) to reduce channel access delays in wireless systems, e.g., such as in current and future IEEE 802.11 systems.

For example, in some embodiments, a wireless device, such as an access point or wireless station, may be configured to transmit, at a start of a TxOP to one or more wireless devices, signaling indicating that the TxOP includes one or more sub-TxOPs. In other words, an owner of a TxOP may transmit signaling to neighboring devices that the TxOP includes one or more sub-TxOPs. The wireless device may be configured to contend, during a first contention period (CP) preceding a first sub-TxOP of the one or more sub-TxOPs, for access to a medium. A duration of the first CP is based on a number of CP units included in the first CP. In addition, a duration of the first CP is less than a point coordination function (PCF) interframe space (PIFS). Further, the wireless device may be configured to transmit, upon determining that the wireless device can transmit in the first sub-TxOP, data to at least one wireless device of the one or more wireless devices. In other words, the wireless device, upon winning and/or gaining access to the medium via the contention, may transmit data in the first sub-TxOP.

As another example, in some embodiments, a wireless device, such as an access point or wireless station, may be configured to receive, at a start of a TxOP controlled by a first wireless device, signaling from the first wireless device indicating that the TxOP includes one or more sub-TxOPs. In other words, an owner of a TxOP may transmit signaling to neighboring devices that the TxOP includes one or more sub-TxOPs. The wireless device may be configured to contend, during a first CP preceding a first sub-TxOP of the one or more sub-TxOPs, with at least the first wireless device for access to a medium. A duration of the first CP is based on a number of CP units included in the first CP. In addition, a duration of the first CP may be less than a PIFS. Further, the wireless device may be configured to transmit, upon determining that the wireless device can transmit in the first sub-TxOP, data to at least one other wireless device. In other words, the wireless device, upon winning and/or gaining access to the medium via the contention, may transmit data in the first sub-TxOP.

As an additional example, in some embodiments, a wireless device, such as an access point or wireless station, may be configured to transmit, at a start of a TxOP to one or more wireless devices, signaling indicating that the TxOP includes one or more sub-TxOPs. In other words, an owner of a TxOP may transmit signaling to neighboring devices that the TxOP includes one or more sub-TxOPs. Additionally, the wireless device may be configured to contend, during a first CP preceding a first sub-TxOP of the one or more sub-TxOPs, for access to a medium using a distributed contention procedure and/or a scheduled contention procedure. A duration of the first CP is based on a number of CP units included in the first CP. In addition, a duration of the first CP may be less than a PIFS.

As yet another example, in some embodiments, a wireless device, such as an access point or wireless station, may be configured to receive, at a start of a TxOP controlled by a first wireless device, signaling from the first wireless device indicating that the TxOP includes one or more sub-TxOPs. In other words, an owner of a TxOP may transmit signaling to neighboring devices that the TxOP includes one or more sub-TxOPs. In addition, the wireless device may be configured to contend, during a first contention period (CP) preceding a first sub-TxOP of the one or more sub-TxOPs, with at least the first wireless device for access to a medium with at least the first wireless device for access to a medium using a distributed contention procedure and/or a scheduled contention procedure. A duration of the first CP is based on a number of CP units included in the first CP. In addition, a duration of the first CP may be less than a PIFS.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example of a wireless communication system, according to some embodiments.
Figure 2A illustrates an example of wireless devices communicating, according to some embodiments.
Figure 2B illustrates an example simplified block diagram of a wireless device, according to some embodiments.
Figure 2C illustrates an example WLAN communication system, according to some embodiments.
Figure 3A illustrates an example simplified block diagram of a WLAN Access Point (AP), according to some embodiments.
Figure 3B illustrates an example simplified block diagram of a wireless station (UE), according to some embodiments.
Figure 3C illustrates an example simplified block diagram of a wireless node, according to some embodiments.
Figure 4 illustrates an example of a channel access delay in current IEEE 802.11 implementations.
Figure 5 illustrates an example of a structure of a TxOP system, according to some embodiments.
Figures 6A, 6B, and 6C illustrate examples of operation of a sub-TxOP, according to some embodiments.
Figure 7 illustrates an example of a structure of a contention period, according to some embodiments.
Figures 8, 9, 10, 11, 12, and 13 illustrate block diagrams of examples of methods for wireless communications, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that may appear throughout the present application are provided below:
**UE**: User Equipment
**AP**: Access Point
**TX**: Transmission/Transmit
**RX**: Reception/Receive
TxOP: Transmit Opportunity
sub-TxOP: Sub-transmit Opportunity within a TxOP
**UWB**: Ultra-wideband
**BTBLE**: BLUETOOTH^{™}/BLUETOOTH^{™} Low Energy
**LAN:** Local Area Network
**WLAN:** Wireless LAN
**RAT:** Radio Access Technology

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random-access memory such as DRAM, DDR RAM, SRAM, EDO RAM, Rambus RAM, etc.; a nonvolatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System -** any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**Positional Tag (or tracking device)** - any of various types of computer systems devices which are mobile or portable and which performs wireless communications, such as communication with a neighboring or companion device to share, determine, and/or update a location of the positional tag. Wireless communication can be via various protocols, including, but not limited to, Bluetooth, Bluetooth Low Energy (BLE), Wi-Fi, ultra-wide band (LTWB), and/or one or more proprietary communication protocols.

**Mobile Device (or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (or combination of devices) which is easily transported by a user and capable of wireless communication using WLAN or Wi-Fi.

**Wireless Device (or Wireless Station)** - any of various types of computer systems devices which performs wireless communications using WLAN communications. As used herein, the term "wireless device" may refer to a mobile device, as defined above, or to a stationary device, such as a stationary wireless client or a wireless base station. For example, a wireless device may be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.

**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.

**Processing Element** - refers to various implementations of digital circuitry that perform a function in a computer system. Additionally, processing element may refer to various implementations of analog or mixed-signal (combination of analog and digital) circuitry that perform a function (or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Concurrent** - refers to parallel execution or performance, where tasks, processes, signaling, messaging, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

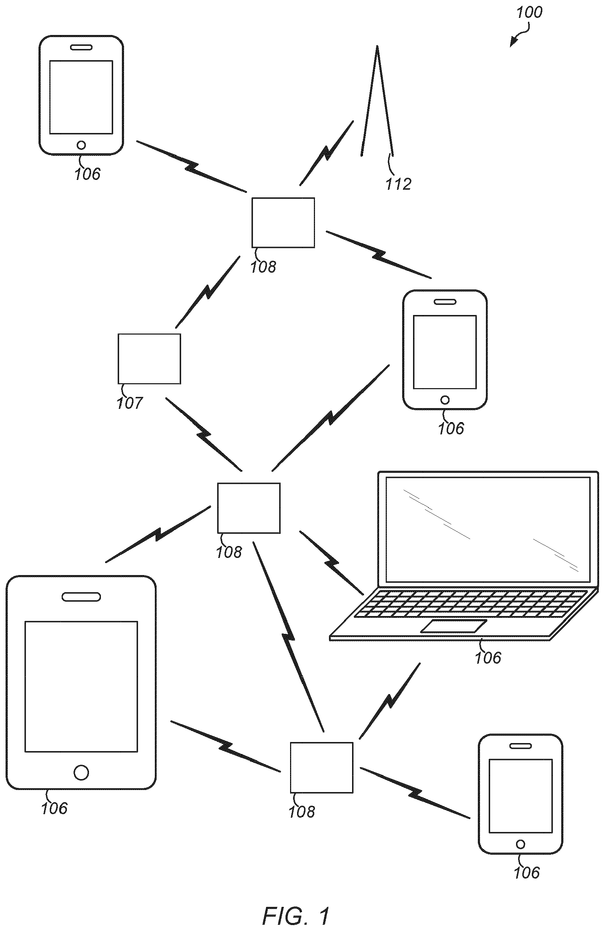

### Figure 1 - Wireless Communication System

Figure 1 illustrates an example wireless communication system, according to some embodiments. It is noted that the system of Figure 1 is merely one example of a possible system, and embodiments of this disclosure may be implemented in any of various systems, as desired. As shown, the exemplary system 100 includes a plurality of wireless client stations or devices, or user equipment (UEs), 106 that are configured to communicate wirelessly with various components within the system 100, such as an Access Point (AP) 112, other client stations 106, wireless nodes 107, and/or positional tag devices 108. Some implementations can include one or more base stations in addition to, or in place of, AP 112. The AP 112 may be a Wi-Fi access point and may include one or more other radios/access technologies (e.g., Bluetooth (BT), ultra-wide band (UWB), etc.) for wirelessly communicating with the various components of system 100. The AP 112 may communicate via wired and/or wireless communication channels with one or more other electronic devices (not shown) and/or another network, such as the Internet. The AP 112 may be configured to operate according to any of various communications standards, such as the various IEEE 802.11 standards as well as one or more proprietary communication standards, e.g., based on wideband, ultra-wideband, and/or additional short range/low power wireless communication technologies. In some embodiments, at least one client station 106 may be configured to communicate directly with one or more neighboring devices (e.g., other client stations 106, wireless nodes 107, and/or positional tag devices 108), without use of the access point 112 (e.g., peer-to-peer (P2P) or device-to-device (D2D)). As shown, wireless node 107 may be implemented as any of a variety of devices, such as wearable devices, gaming devices, and so forth. In some embodiments, wireless node 107 may be various Internet of Things (IoT) devices, such as smart appliances (e.g., refrigerator, stove, oven, dish washer, clothes washer, clothes dryer, and so forth), smart thermostats, and/or other home automation devices (e.g., such as smart electrical outlets, smart lighting fixtures, and so forth).

As shown, a positional tag device 108 may communicate with one or more other components within system 100. In some embodiments, positional tag device 108 may be associated with a companion device (e.g., a client station 106) and additionally be capable of communicating with one or more additional devices (e.g., other client stations 106, wireless nodes 107, AP 112). In some embodiments, communication with the companion device may be via one or more access technologies/protocols, such as BLUETOOTH^{™} (and/or BLUETOOTH^{™} (BT) Low Energy (BLE)), Wi-Fi peer-to-peer (e.g., Wi-Fi Direct, Neighbor Awareness Networking (NAN), and so forth), millimeter wave (mmWave) (e.g., 60GHz, such as 802.11 ad / ay), as well as any of various proprietary protocols (e.g., via wideband or ultra-wideband (UWB) and/or low and/or ultra-low power (LP/ULP) wireless communication). In some embodiments, communication with additional devices may be via BTBLE as well as one or more other short-range peer-to-peer wireless communication techniques (e.g., various near-field communication (NFC) techniques, RFID, NAN, Wi-Fi Direct, UWB, LT/ULP, and so forth). In some embodiments, positional tag device 108 may be capable of updating a server with a current location (e.g., determined by tag device 108 and/or provided to tag device 108 from another device) via the one or more additional devices as well as via the companion device.

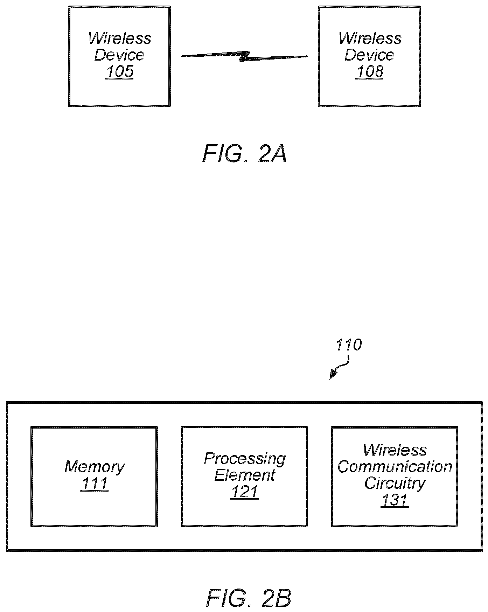

### Figures 2A-2B - Wireless Communication System

Figure 2A illustrates an exemplary (and simplified) wireless communication system in which aspects of this disclosure may be implemented. It is noted that the system of Figure 2A is merely one example of a possible system, and embodiments of this disclosure may be implemented in any of various systems, as desired.

As shown, the exemplary wireless communication system includes a ("first") wireless device 105 in communication with another ("second") wireless device 108. The first wireless device 105 and the second wireless device 108 may communicate wirelessly using any of a variety of wireless communication techniques.

As one possibility, the first wireless device 105 and the second wireless device 108 may perform communication using wireless local area networking (WLAN) communication technology (e.g., IEEE 802.11 / Wi-Fi based communication) and/or techniques based on WLAN wireless communication. One or both of the wireless device 105 and the wireless device 108 may also (or alternatively) be capable of communicating via one or more additional wireless communication protocols, such as any of BLUETOOTH^{™} (BT), BLUETOOTH^{™} Low Energy (BLE), near field communication (NFC), RFID, UWB, LP/ULP, LTE, LTE-Advanced (LTE-A), 5GNR, etc.

The wireless devices 105 and 108 may be any of a variety of types of wireless device. As one possibility, wireless device 105 may be a substantially portable wireless user equipment (UE) device, such as a smart phone, hand-held device, a laptop computer, a wearable device (such as a smart watch), a tablet, a motor vehicle, or virtually any type of wireless device. As another possibility, wireless device 105 may be a substantially stationary device, such as a payment kiosk/payment device, point of sale (POS) terminal, set top box, media player (e.g., an audio or audiovisual device), gaming console, desktop computer, appliance, door, access point, base station, or any of a variety of other types of device. The wireless device 108 may be a positional tag device, e.g., in a stand-alone form factor, associated with, attached to, and/or otherwise integrated into another computing device, and/or associated with, attached to, and/or integrated into a personal article or device (e.g., a wallet, a backpack, luggage, a briefcase, a purse, a key ring/chain, personal identification, and so forth) and/or a commercial article (e.g., a shipping container, shipping/storage pallet, an item of inventory, a vehicle, and so forth).

Each of the wireless devices 105 and 108 may include wireless communication circuitry configured to facilitate the performance of wireless communication, which may include various digital and/or analog radio frequency (RF) components, one or more processors configured to execute program instructions stored in memory, one or more programmable hardware elements such as a field-programmable gate array (FPGA), a programmable logic device (PLD), an application specific IC (ASIC), and/or any of various other components. The wireless device 105 and/or the wireless device 108 may perform any of the method embodiments or operations described herein, or any portion of any of the method embodiments or operations described herein, using any or all of such components.

Each of the wireless devices 105 and 108 may include one or more antennas and corresponding radio frequency front-end circuitry for communicating using one or more wireless communication protocols. In some cases, one or more parts of a receive and/or transmit chain may be shared between multiple wireless communication standards; for example, a device might be configured to communicate using BTBLE or Wi-Fi using partially or entirely shared wireless communication circuitry (e.g., using a shared radio or one or more shared radio components). The shared communication circuitry may include a single antenna, or may include multiple antennas (e.g., for MIMO) for performing wireless communications. Alternatively, a device may include separate transmit and/or receive chains (e.g., including separate antennas and other radio components) for each wireless communication protocol with which it is configured to communicate. As a further possibility, a device may include one or more radios or radio components that are shared between multiple wireless communication protocols, and one or more radios or radio components that are used exclusively by a single wireless communication protocol. For example, a device might include a shared radio for communicating using one or more of LTE, and/or 5GNR, and one or more separate radios for communicating using Wi-Fi and/or BT/BLE. Other configurations are also possible.

As previously noted, aspects of this disclosure may be implemented in conjunction with the wireless communication system of Figure 2A. For example, a wireless device (e.g., either of wireless devices 105 or 108) may be configured to implement (and/or assist in implementation of) the methods described herein.

Figure 2B illustrates an exemplary wireless device 110 (e.g., corresponding to wireless devices 105 and/or 108) that may be configured for use in conjunction with various aspects of the present disclosure. The device 110 may be any of a variety of types of device and may be configured to perform any of a variety of types of functionality. The device 110 may be a substantially portable device or may be a substantially stationary device, potentially including any of a variety of types of device. The device 110 may be configured to perform any of the techniques or features illustrated and/or described herein, including with respect to any or all of the Figures.

As shown, the device 110 may include a processing element 121. The processing element may include or be coupled to one or more memory elements. For example, the device 110 may include one or more memory media (e.g., memory 111), which may include any of a variety of types of memory and may serve any of a variety of functions. For example, memory 111 could be RAM serving as a system memory for processing element 121. Additionally or alternatively, memory 111 could be ROM serving as a configuration memory for device 110. Other types and functions of memory are also possible.

Additionally, the device 110 may include wireless communication circuitry 131. The wireless communication circuitry may include any of a variety of communication elements (e.g., antenna for wireless communication, analog and/or digital communication circuitry/controllers, etc.) and may enable the device to wirelessly communicate using one or more wireless communication protocols.

Note that in some cases, the wireless communication circuitry 131 may include its own processing element(s) (e.g., a baseband processor), e.g., in addition to the processing element 121. For example, the processing element 121 may be an `application processor' whose primary function may be to support application layer operations in the device 110, while the wireless communication circuitry 131 may be a `baseband processor' whose primary function may be to support baseband layer operations (e.g., to facilitate wireless communication between the device 110 and other devices) in the device 110. In other words, in some cases the device 110 may include multiple processing elements (e.g., may be a multi-processor device). Other configurations (e.g., instead of or in addition to an application processor / baseband processor configuration) utilizing a multi-processor architecture are also possible.

The device 110 may additionally include any of a variety of other components (not shown) for implementing device functionality, depending on the intended functionality of the device 110, which may include further processing and/or memory elements (e.g., audio processing circuitry), one or more power supply elements (which may rely on battery power and/or an external power source) user interface elements (e.g., display, speaker, microphone, camera, keyboard, mouse, touchscreen, etc.), and/or any of various other components.

The components of the device 110, such as processing element 121, memory 111, and wireless communication circuitry 131, may be operatively (or communicatively) coupled via one or more interconnection interfaces, which may include any of a variety of types of interface, possibly including a combination of multiple types of interfaces. As one example, a USB high-speed inter-chip (HSIC) interface may be provided for inter-chip communications between processing elements. Alternatively (or in addition), a universal asynchronous receiver transmitter (UART) interface, a serial peripheral interface (SPI), inter-integrated circuit (I2C), system management bus (SMBus), and/or any of a variety of other communication interfaces may be used for communications between various device components. Other types of interfaces (e.g., intra-chip interfaces for communication within processing element 121, peripheral interfaces for communication with peripheral components within or external to device 110, etc.) may also be provided as part of device 110.

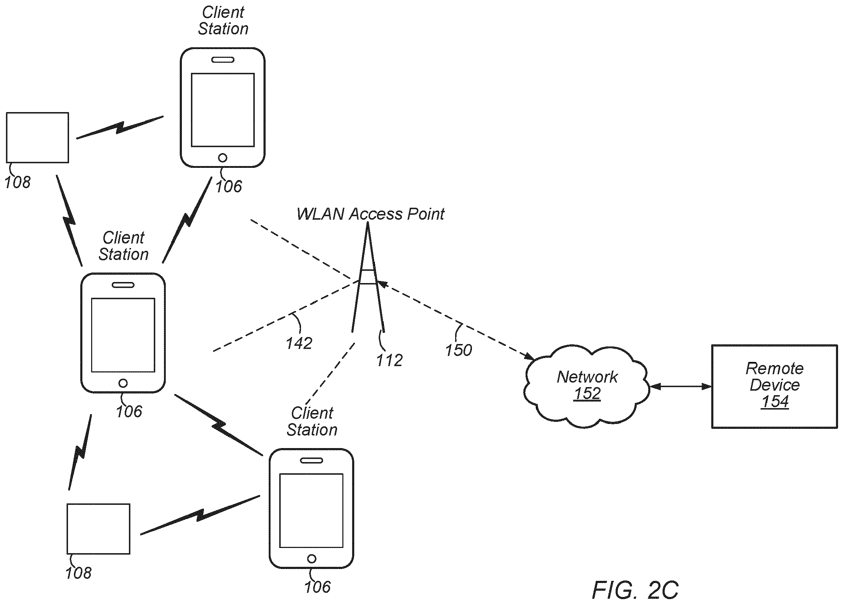

### Figure 2C - WLAN System

Figure 2C illustrates an example WLAN system according to some embodiments. As shown, the exemplary WLAN system includes a plurality of wireless client stations or devices, or user equipment (UEs), 106 that are configured to communicate over a wireless communication channel 142 with an Access Point (AP) 112. In some embodiments, the AP 112 may be a Wi-Fi access point. The AP 112 may communicate via wired and/or wireless communication channel(s) 150 with one or more other electronic devices (not shown) and/or another network 152, such as the Internet. Additional electronic devices, such as the remote device 154, may communicate with components of the WLAN system via the network 152. For example, the remote device 154 may be another wireless client station. The WLAN system may be configured to operate according to any of various communications standards, such as the various IEEE 802.11 standards. In some embodiments, at least one wireless device 106 is configured to communicate directly with one or more neighboring mobile devices, such as positional tag devices 108, without use of the access point 112.

Further, in some embodiments, as further described below, a wireless device 106 (which may be an exemplary implementation of device 110) may be configured to perform (and/or assist in performance of) the methods described herein.

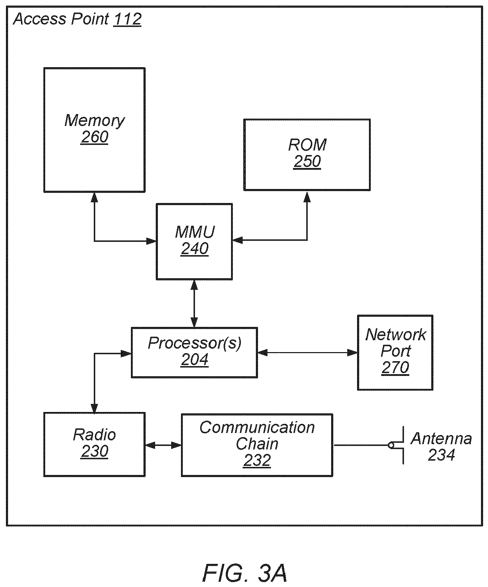

### Figure 3A - Access Point Block Diagram

Figure 3A illustrates an exemplary block diagram of an access point (AP) 112, which may be one possible exemplary implementation of the device 110 illustrated in Figure 2B. It is noted that the block diagram of the AP of Figure 3A is only one example of a possible system. As shown, the AP 112 may include processor(s) 204, which may execute program instructions for the AP 112. The processor(s) 204 may also be coupled (directly or indirectly) to memory management unit (MMU) 240, which may be configured to receive addresses from the processor(s) 204 and to translate those addresses into locations in memory (e.g., memory 260 and read only memory (ROM) 250) or to other circuits or devices.

The AP 112 may include at least one network port 270. The network port 270 may be configured to couple to a wired network and provide a plurality of devices, such as mobile devices 106, access to the Internet. For example, the network port 270 (or an additional network port) may be configured to couple to a local network, such as a home network or an enterprise network. For example, port 270 may be an Ethernet port. The local network may provide connectivity to one or more additional networks, such as the Internet.

The AP 112 may include at least one antenna 234 and wireless communication circuitry 230, which may be configured to operate as a wireless transceiver and may be further configured to communicate with mobile device 106 (as well as positional tag device 108). The antenna 234 communicates with the wireless communication circuitry 230 via communication chain 232. Communication chain 232 may include one or more receive chains and/or one or more transmit chains. The wireless communication circuitry 230 may be configured to communicate via Wi-Fi or WLAN, e.g., 802.11. The wireless communication circuitry 230 may also, or alternatively, be configured to communicate via various other wireless communication technologies, including, but not limited to, BT/BLE, UWB, and/or LP/ULP. Further, in some embodiments, the wireless communication circuitry 230 may also, or alternatively, be configured to communicate via various other wireless communication technologies, including, but not limited to, Fifth Generation (5G) New Radio (NR), Long-Term Evolution (LTE), LTE Advanced (LTE-A), Wideband Code Division Multiple Access (WCDMA), etc., for example when the AP is co-located with a base station in case of a small cell, or in other instances when it may be desirable for the AP 112 to communicate via various different wireless communication technologies.

Further, in some embodiments, as further described below, AP 112 may be configured to perform (and/or assist in performance of) the methods described herein.

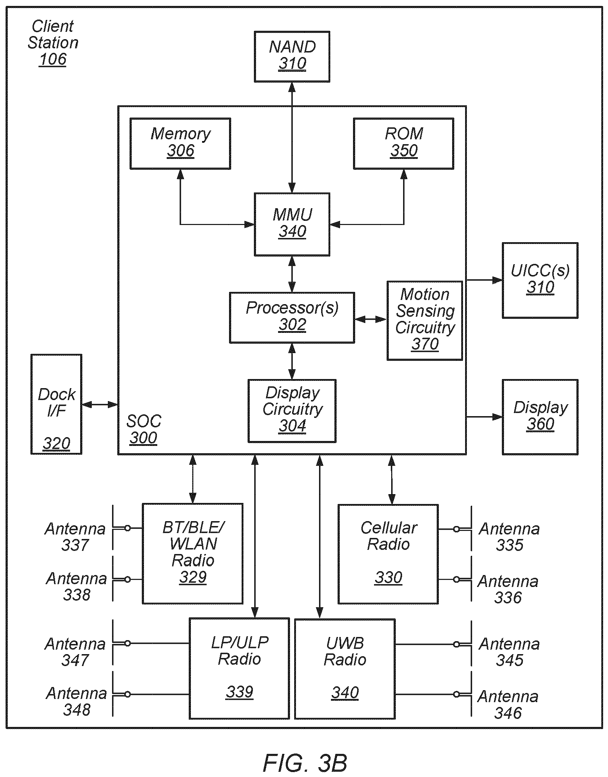

### Figure 3B - Client Station Block Diagram

Figure 3B illustrates an example simplified block diagram of a client station 106, which may be one possible exemplary implementation of the device 110 illustrated in Figure 2B. According to embodiments, client station 106 may be a user equipment (UE) device, a mobile device or mobile station, and/or a wireless device or wireless station. As shown, the client station 106 may include a system on chip (SOC) 300, which may include portions for various purposes. The SOC 300 may be coupled to various other circuits of the client station 106. For example, the client station 106 may include various types of memory (e.g., including NAND flash 310), a connector interface (I/F) (or dock) 320 (e.g., for coupling to a computer system, dock, charging station, etc.), the display 360, cellular communication circuitry 330 such as for LTE, etc., short to medium range wireless communication circuitry 329 (e.g., Bluetooth^{™} and WLAN circuitry), low power/ultra-low power (LP/ULP) radio 339, and ultra-wideband radio 341. The client station 106 may further include one or more smart cards 310 that incorporate SIM (Subscriber Identity Module) functionality, such as one or more UICC(s) (Universal Integrated Circuit Card(s)) cards 345. The cellular communication circuitry 330 may couple to one or more antennas, such as antennas 335 and 336 as shown. The short to medium range wireless communication circuitry 329 may also couple to one or more antennas, such as antennas 337 and 338 as shown. LP/ULP radio 339 may couple to one or more antennas, such as antennas 347 and 348 as shown. Additionally, UWB radio 341 may couple to one or more antennas, such as antennas 345 and 346. Alternatively, the radios may share one or more antennas in addition to, or instead of, coupling to respective antennas or respective sets of antennas. Any or all of the radios may include multiple receive chains and/or multiple transmit chains for receiving and/or transmitting multiple spatial streams, such as in a multiple-input multiple output (MIMO) configuration.

As shown, the SOC 300 may include processor(s) 302, which may execute program instructions for the client station 106 and display circuitry 304, which may perform graphics processing and provide display signals to the display 360. The SOC 300 may also include motion sensing circuitry 370, which may detect motion of the client station 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses into locations in memory (e.g., memory 306, read only memory (ROM) 350, NAND flash memory 310) and/or to other circuits or devices, such as the display circuitry 304, cellular communication circuitry 330, short range wireless communication circuitry 329, LP/ULP communication circuitry 339, UWB communication circuitry 341, connector interface (I/F) 320, and/or display 360. The MMU 340 may be configured to perform memory protection and page table translation or set up. In some embodiments, the MMU 340 may be included as a portion of the processor(s) 302.

As noted above, the client station 106 may be configured to communicate wirelessly directly with one or more neighboring client stations and/or one or more positional tag devices 108. The client station 106 may be configured to communicate according to a WLAN RAT for communication in a WLAN network, such as that shown in Figure 2C. Further, in some embodiments, as further described below, client station 106 may be configured to perform (and/or assist in performance of) the methods described herein.

As described herein, the client station 106 may include hardware and/or software components for implementing the features described herein. For example, the processor 302 of the client station 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the UE 106, in conjunction with one or more of the other components 300, 304, 306, 310, 320, 329, 330, 335, 336, 337, 338, 339, 340, 341, 345, 346, 347, 348, 350, and/or 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 204.

Further, as described herein, cellular communication circuitry 330 and short-range wireless communication circuitry 329 may each include one or more processing elements. Thus, each of cellular communication circuitry 330 and short-range wireless communication circuitry 329 may include one or more integrated circuits (ICs) configured to perform the functions of cellular communication circuitry 330 and short-range wireless communication circuitry 329, respectively.

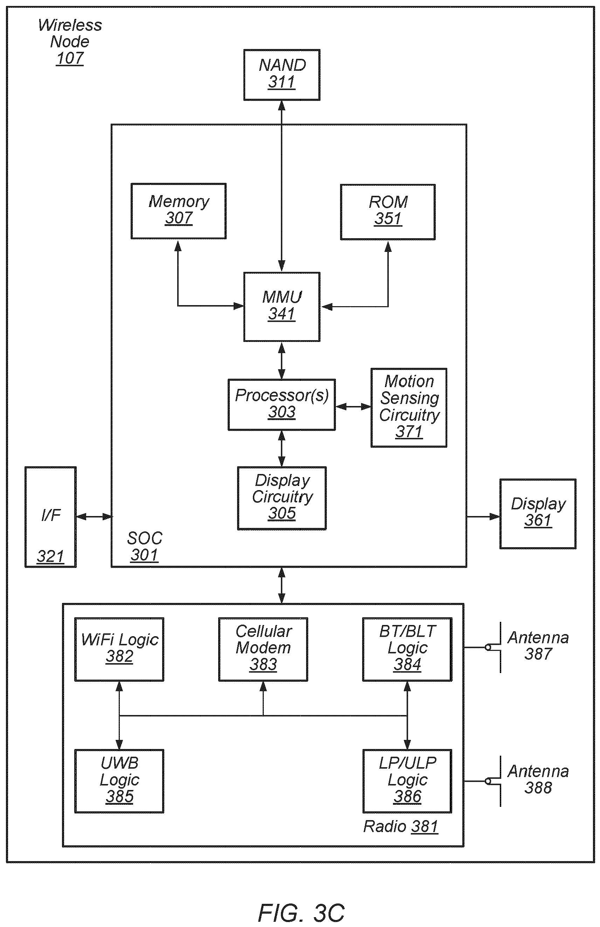

### Figure 3C - Wireless Node Block Diagram

Figure 3C illustrates one possible block diagram of a wireless node 107, which may be one possible exemplary implementation of the device 110 illustrated in Figure 2B. As shown, the wireless node 107 may include a system on chip (SOC) 301, which may include portions for various purposes. For example, as shown, the SOC 301 may include processor(s) 303 which may execute program instructions for the wireless node 107, and display circuitry 305 which may perform graphics processing and provide display signals to the display 361. The SOC 301 may also include motion sensing circuitry 371 which may detect motion of the wireless node 107, for example using a gyroscope, accelerometer, and/or any of various other motion sensing components. The processor(s) 303 may also be coupled to memory management unit (MMU) 341, which may be configured to receive addresses from the processor(s) 303 and translate those addresses to locations in memory (e.g., memory 307, read only memory (ROM) 351, flash memory 311). The MMU 341 may be configured to perform memory protection and page table translation or set up. In some embodiments, the MMU 341 may be included as a portion of the processor(s) 303.

As shown, the SOC 301 may be coupled to various other circuits of the wireless node 107. For example, the wireless node 107 may include various types of memory (e.g., including NAND flash 311), a connector interface 321 (e.g., for coupling to a computer system, dock, charging station, etc.), the display 361, and wireless communication circuitry (radio) 381 (e.g., for 5G NR, LTE, LTE-A, Bluetooth, Wi-Fi, NFC, GPS, UWB, LP/ULP, etc.).

The wireless node 107 may include at least one antenna, and in some embodiments, multiple antennas 387 and 388, for performing wireless communication with base stations and/or other devices. For example, the wireless node 107 may use antennas 387 and 388 to perform the wireless communication. As noted above, the wireless node 107 may in some embodiments be configured to communicate wirelessly using a plurality of wireless communication standards or radio access technologies (RATs).

The wireless communication circuitry (radio) 381 may include Wi-Fi Logic 382, a Cellular Modem 383, BTBLE Logic 384, UWB logic 385, and LP/ULP logic 386. The Wi-Fi Logic 382 is for enabling the wireless node 107 to perform Wi-Fi communications, e.g., on an 802.11 network and/or via peer-to-peer communications (e.g., NAN). The BT/BLE Logic 384 is for enabling the wireless node 107 to perform Bluetooth communications. The cellular modem 383 may be capable of performing cellular communication according to one or more cellular communication technologies. The UWB logic 385 is for enabling the wireless node 107 to perform UWB communications. The LP/ULP logic 386 is for enabling the wireless node 107 to perform LP/ULP communications. Some or all components of the wireless communication circuitry 381 may be used for communications with a positional tag device 108.

As described herein, wireless node 107 may include hardware and software components for implementing embodiments of this disclosure. For example, one or more components of the wireless communication circuitry 381 of the wireless node 107 may be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit). For example, in some embodiments, as further described below, wireless node 107 may be configured to perform (and/or assist in the performance of) the methods described herein.

### Sub-transmit Opportunity

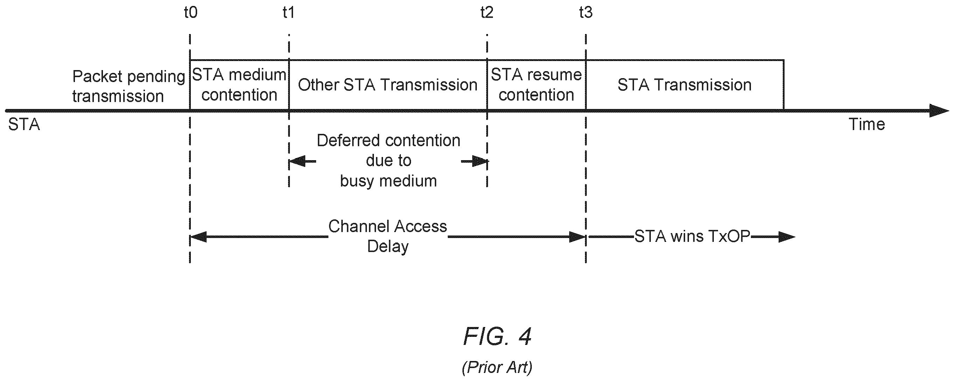

In current implementations, it may be desirable for a wireless station (e.g., STA) to quickly transmit a high priority packet once it arrives for transmission at the STA. However, for a quick transmission (e.g., low latency transmission) to occur, the STA may require quick access to a transmit opportunity (TxOP). However, current IEEE 802.11 implementations and/or amendments may result in high channel access delays. For example, as illustrated by Figure 4, a wireless station (STA) may determine it has a packet (e.g., data packet, such as a high priority packet) pending transmission at time t0 and may initiate a clear channel assessment (CCA). Thus, between times t0 and t1 the wireless station may contend for medium access. However, at time 11, the wireless station may not gain access to the medium due to another station transmitting on the medium. Thus, between times t1 and t2, the wireless station may defer medium contention due to the medium being busy and/or occupied. Further, at time t2, the wireless station may resume medium contention, e.g., may initiate and/or re-initiate a CCA. Then, at t3, the wireless station may successfully gain access to the medium and begin transmission of the pending packet. However, at this point, the wireless station has experienced a channel access delay (e.g., time elapsed from t0 to t3) prior to gaining access to the medium. Such a delay may be undesirable, at least in some cases.

In addition, although high priority packet arrival patterns at a wireless station may be deterministic in some (and/or many) cases, there still may exist some jitter in the arrival pattern. Thus, mechanisms that rely on scheduling transmit opportunities based on the high priority packet arrival patterns may still result in some channel access delays due to the jitter in the arrival pattern. Therefore, improvements are desired.

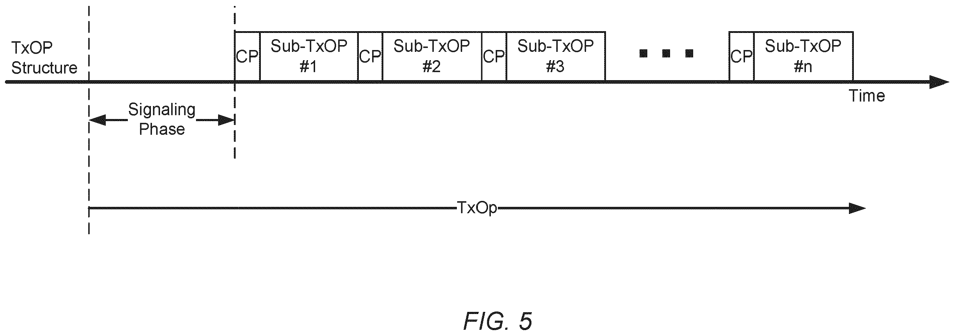

Embodiments described herein relate to systems, methods, and mechanisms for a sub-transmit opportunity (sub-TxOP) and/or sub-TxOPs within a transmit opportunity (e.g., TxOP) to reduce channel access delays in wireless systems, e.g., such as in current and future IEEE 802.11 systems. For example, in some embodiments described herein, a TxOP may include a plurality (e.g., more than one, such as one or more, two or more, and so forth) of sub-TxOPs and a sub-TxOP may be preceded by a short medium contention period (CP) with particular medium access rules, e.g., as illustrated by Figure 5. As shown, a TxOP structure may include an initial signaling phase (e.g., to notify neighboring wireless stations of sub-TxOPs in the TxOP) and one or more sub-TxOPs. Further, as shown, each sub-TxOP may be preceded by a CP. For example, in some embodiments, a plurality of wireless stations may be informed that a TxOP includes sub-TxOPs and a first portion (or first subset) of the informed wireless stations may contend for medium access during the sub-TxOPs. For example, a first wireless station may win (e.g., gain medium access for) one or more sub-TxOPs while a second wireless station may not win (e.g., gain medium access to) any sub-TxOPs. In addition, a second portion (or second sub-set) of the informed wireless stations may be barred from and/or disallowed from contending for the sub-TxOPs. In some embodiments, a transmission may be required to end by an end of a sub-TxOP. In other words, a wireless station that gains access to the medium during a sub-TxOP may be required to complete a transmission by the end of the sub-TxOP. Further, to avoid unused airtime gaps, an access point (and/or wireless station) that owns the TxOP may transmit in an unoccupied sub-TxOP (e.g., if no other wireless station is transmitting in that sub-TxOP).

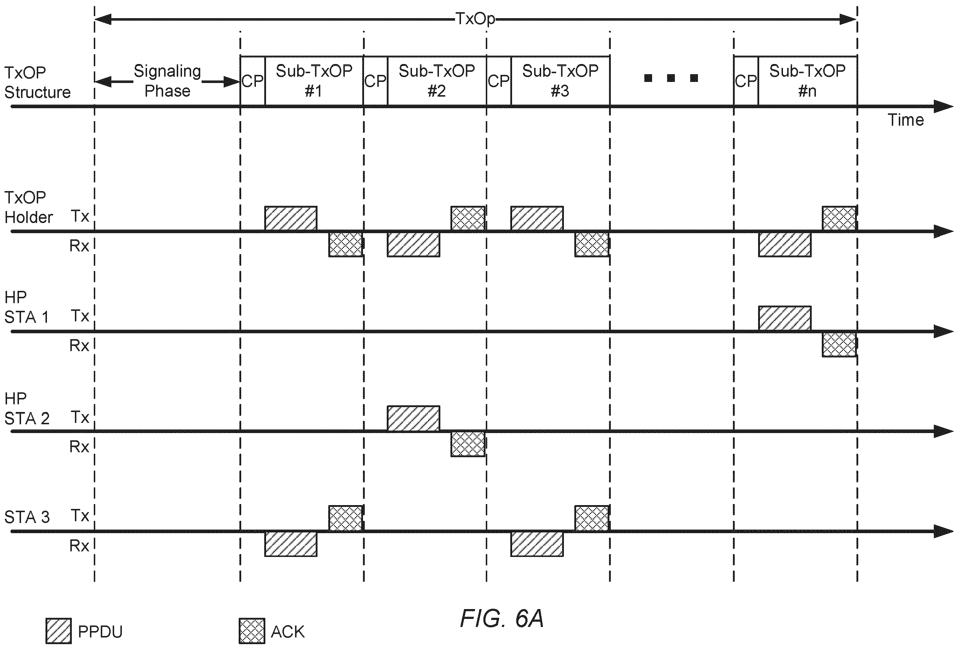

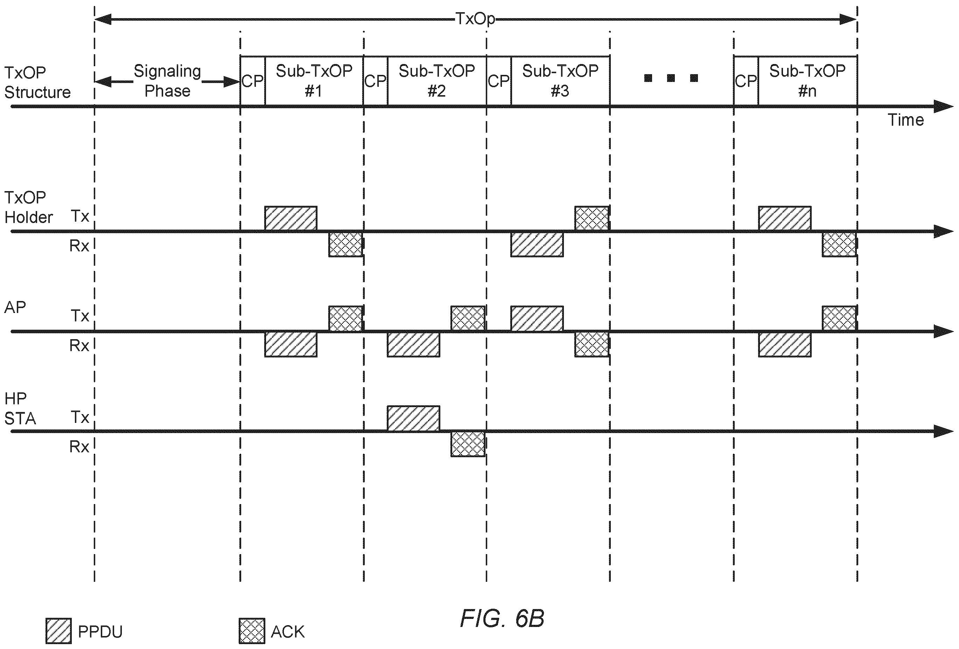

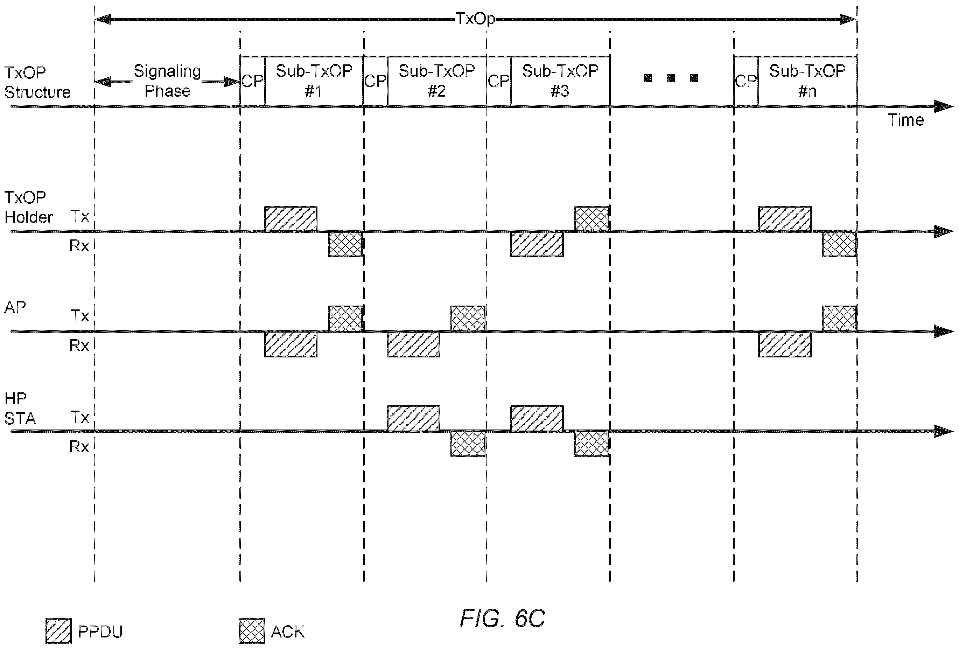

Figures 6A, 6B, and 6C illustrate examples of operation of a sub-TxOP, according to some embodiments.

Turning to Figure 6A, as shown the example may proceed as follows. First, prior to a signaling phase at a beginning of a TxOP that includes multiple sub-TxOPs, a TxOP holder may have secured the medium through contention for the TxOP. The TxOP holder may be an access point, such as AP 112, or a wireless station, such as wireless station 106. The signaling phase may include signaling to notify one or more wireless stations, such as high priority wireless station 1 (HP STA 1), high priority station 2 (HP STA 2), and an other wireless station (STA 3) of an opportunity to contend for sub-TxOPs during the TxOP of the TxOP holder. The signaling may include any/all of an indication that the TxOP includes sub-TxOPs (e.g., that the TxOP is a sub-TxOP system), information regarding contention for the sub-TxOP (e.g., such as a method for contention during a contention period (CP) preceding a sub-TxOP), identification of devices that can participate in the TxOP (e.g., that may contend for sub-TxOPs), a duration of a contention period (and/or contention phase), and/or a duration of a sub-TxOP, among other information. The signaling may be a management frame, such as a multi-user (MU) request-to-send (RTS) frame and/or a clear-to-send (CTS) frame. In some instances, to avoid hidden node issues, the TxOP holder may choose participating devices that are within range, e.g., of one another and/or of the TxOP holder. In some instances, to avoid hidden node issues, data transmissions in a sub-TxOP may be preceded with a RTS and/or CTS frame between a transmitter and receiver, thus mitigating hidden node issues. The signaling phase may then be followed by a first contention period, e.g., associated with a first sub-TxOP, such as sub-TxOP #1. As shown, the TxOP holder may win (e.g., gain access to) sub-TxOP #1 during the first contention period (CP). Thus, the TxOP holder may transmit (e.g., a single user (SU) or MU physical layer protocol data unit (PPDU) and/or a PPDU including a trigger frame to solicit a trigger based (TB) PPDU from a participating device) and receive (e.g., a TB PPDU and/or an acknowledgement (ACK) frame) during sub-TxOP #1. Note that the PPDU may include one or more padding bits to avoid unused airtime gaps (e.g., airtime gaps greater than a point coordination function (PCF) interframe space (PIFS)) between contention periods, e.g., to avoid losing the medium. In the example shown, the TxOP holder transmits a PPDU to STA 3, which is shown as receiving the PPDU and transmitting an ACK frame to the TxOP holder. A second CP associated with TxOP #2 may begin at the end of TxOP #1. As shown, HP STA 2 may win (e.g., gain access to) sub-TxOP #2 during the second CP. Thus, HP STA 2 may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #2. Note that the PPDU may include one or more padding bits to avoid unused airtime gaps (e.g., airtime gaps greater than a PIFS) between contention periods, e.g., to avoid losing the medium. In the example shown, HP STA 2 transmits a PPDU to the TxOP holder, which is shown as receiving the PPDU and transmitting an ACK frame to HP STA 2. A third CP associated with TxOP #3 may begin at the end of TxOP #2. As shown, the TxOP holder may win (e.g., gain access to) sub-TxOP #3 during the third CP. Thus, the TxOP holder may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #3. Note that the PPDU may include one or more padding bits to avoid unused airtime gaps (e.g., airtime gaps greater than a PIFS) between contention periods, e.g., to avoid losing the medium. In the example shown, the TxOP holder transmits a PPDU to STA 3, which is shown as receiving the PPDU and transmitting an ACK frame to the TxOP holder. This process may continue until a final nth contention period associated with a final nth sub-TxOP (e.g., sub-TxOP #n). As shown, HP STA 1 may win (e.g., gain access to) sub-TxOP #n during the nth CP. Thus, HP STA 1 may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #n. Note that the PPDU may include padding bits to avoid unused airtime gaps (e.g., airtime gaps greater than a PIFS) between contention periods, e.g., to avoid losing the medium. In the example shown, HP STA 1 transmits a PPDU to the TxOP holder, which is shown as receiving the PPDU and transmitting an ACK frame to HP STA 1.

Turning to Figure 6B, as shown the example may proceed as follows. First, prior to a signaling phase at a beginning of a TxOP that includes multiple sub-TxOPs, a TxOP holder may have secured the medium through contention for the TxOP. The TxOP holder may be an access point, such as AP 112, or a wireless station, such as wireless station 106. The signaling phase may include signaling to notify one or more wireless stations, such as an access point (AP), e.g., access point 112, and a high priority wireless station (HP STA), such as a wireless station 106, of an opportunity to contend for sub-TxOPs during the TxOP of the TxOP holder. The signaling may include an indication that the TxOP includes sub-TxOPs (e.g., that the TxOP is a sub-TxOP system), information regarding contention for the sub-TxOP (e.g., such as a method for contention during a contention period (CP) preceding a sub-TxOP), identification of devices that can participate in the TxOP (e.g., that may contend for sub-TxOPs), a duration of a contention period (and/or contention phase), and/or a duration of a sub-TxOP, among other information. The signaling may be a management frame, such as a multi-user (MU) request-to-send (RTS) frame and/or a clear-to-send (CTS) frame. In some instances, to avoid hidden node issues, the TxOP holder may choose participating devices that are within range, e.g., of one another and/or of the TxOP holder. In some instances, to avoid hidden node issues, data transmissions in a sub-TxOP may be preceded with a RTS and/or CTS frame between a transmitter and receiver, thus mitigating hidden node issues. The signaling phase may then be followed a first contention period, e.g., associated with a first sub-TxOP, such as sub-TxOP #1. As shown, the TxOP holder may win (e.g., gain access to) sub-TxOP #1 during the first contention period (CP). Thus, the TxOP holder may transmit (e.g., a single user (SU) or MU physical layer protocol data unit (PPDU) and/or a PPDU including a trigger frame to solicit a trigger based (TB) PPDU from a participating device) and receive (e.g., a TB PPDU and/or an acknowledgement (ACK) frame) during sub-TxOP #1. Note that the PPDU may include padding bits to avoid unused airtime gaps (e.g., airtime gaps greater than a point coordination function (PCF) interframe space (PIFS)) between contention periods, e.g., to avoid losing the medium. In the example shown, the TxOP holder transmits a PPDU to the AP, which is shown as receiving the PPDU and transmitting an ACK frame to the TxOP holder. A second CP associated with TxOP #2 may begin at the end of TxOP #1. As shown, the HP STA may win (e.g., gain access to) sub-TxOP #2 during the second CP. Thus, the HP STA may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #2. Note that the PPDU may include padding bits to avoid unused airtime gaps (e.g., airtime gaps greater than a PIFS) between contention periods, e.g., to avoid losing the medium. In the example shown, the HP STA transmits a PPDU to the AP, which is shown as receiving the PPDU and transmitting an ACK frame to the HP STA. A third CP associated with TxOP #3 may begin at the end of TxOP #2. As shown, the AP may win (e.g., gain access to) sub-TxOP #3 during the third CP. Thus, the AP may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #3. Note that the PPDU may include padding bits to avoid unused airtime gaps (e.g., airtime gaps greater than a PIFS) between contention periods, e.g., to avoid losing the medium. In the example shown, the AP transmits a PPDU to the TxOP holder, which is shown as receiving the PPDU and transmitting an ACK frame to the AP. This process may continue until a final nth contention period associated with a final nth sub-TxOP (e.g., sub-TxOP #n). As shown, the TxOP holder may win (e.g., gain access to) sub-TxOP #n during the nth CP. Thus, the TxOP holder may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #n. Note that the PPDU may include padding bits to avoid unused airtime gaps (e.g., airtime gaps greater than a PIFS) between contention periods, e.g., to avoid losing the medium. In the example shown, the TxOP holder transmits a PPDU to the AP, which is shown as receiving the PPDU and transmitting an ACK frame to TxOP holder.

Turning to Figure 6C, as shown the example may proceed as follows. First, prior to a signaling phase at a beginning of a TxOP that includes multiple sub-TxOPs, a TxOP holder may have secured the medium through contention for the TxOP. The TxOP holder may be an access point, such as AP 112, or a wireless station, such as wireless station 106. The signaling phase may include signaling to notify one or more wireless stations, such as an access point (AP), e.g., access point 112, and a high priority wireless station (HP STA), such as a wireless station 106, of an opportunity to contend for sub-TxOPs during the TxOP of the TxOP holder. The signaling may include an indication that the TxOP includes sub-TxOPs (e.g., that the TxOP is a sub-TxOP system), information regarding contention for the sub-TxOP (e.g., such as a method for contention during a contention period (CP) preceding a sub-TxOP), identification of devices that can participate in the TxOP (e.g., that may contend for sub-TxOPs), a duration of a contention period (and/or contention phase), and/or a duration of a sub-TxOP, among other information. The signaling may be a management frame, such as a multi-user (MU) request-to-send (RTS) frame and/or a clear-to-send (CTS) frame. In some instances, to avoid hidden node issues, the TxOP holder may choose participating devices that are within range, e.g., of one another or of the TxOP holder. In some instances, to avoid hidden node issues, data transmissions in a sub-TxOP may be preceded with a RTS and/or CTS frame between a transmitter and receiver, thus mitigating hidden node issues. The signaling phase may then be followed a first contention period, e.g., associated with a first sub-TxOP, such as sub-TxOP #1. As shown, the TxOP holder may win (e.g., gain access to) sub-TxOP #1 during the first contention period (CP). Thus, the TxOP holder may transmit (e.g., a single user (SU) or MU physical layer protocol data unit (PPDU) and/or a PPDU including a trigger frame to solicit a trigger based (TB) PPDU from a participating device) and receive (e.g., a TB PPDU and/or an acknowledgement (ACK) frame) during sub-TxOP #1. Note that the PPDU may include one or more padding bits to avoid unused airtime gaps (e.g., airtime gaps greater than a point coordination function (PCF) interframe space (PIFS)) between contention periods, e.g., to avoid losing the medium. In the example shown, the TxOP holder transmits a PPDU to the AP, which is shown as receiving the PPDU and transmitting an ACK frame to the TxOP holder. A second CP associated with TxOP #2 may begin at the end of TxOP #1. As shown, the HP STA may win (e.g., gain access to) sub-TxOP #2 during the second CP. Thus, the HP STA may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #2. Note that the PPDU may include padding bits to avoid unused airtime gaps (e.g., airtime gaps greater than a PIFS) between contention periods, e.g., to avoid losing the medium. In the example shown, the HP STA transmits a PPDU to the AP, which is shown as receiving the PPDU and transmitting an ACK frame to the HP STA. A third CP associated with TxOP #3 may begin at the end of TxOP #2. As shown, the HP STA may win (e.g., gain access to) sub-TxOP #3 during the third CP. Thus, the HP STA may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #3. Note that the PPDU may include one or more padding bits to avoid unused airtime gaps (e.g., airtime gaps greater than a PIFS) between contention periods, e.g., to avoid losing the medium. In the example shown, the HP STA transmits a PPDU to the TxOP holder, which is shown as receiving the PPDU and transmitting an ACK frame to the HP STA. This process may continue until a final nth contention period associated with a final nth sub-TxOP (e.g., sub-TxOP #n). As shown, the TxOP holder may win (e.g., gain access to) sub-TxOP #n during the nth CP. Thus, the TxOP holder may transmit (e.g., an SU-PPDU, an MU-PPDU, and/or a PPDU including a trigger frame to solicit a TB-PPDU from a participating device) and receive (e.g., a TB PPDU and/or an ACK frame) during sub-TxOP #n. Note that the PPDU may include padding bits to avoid unused airtime gaps (e.g., airtime gaps greater than a PIFS) between contention periods, e.g., to avoid losing the medium. In the example shown, the TxOP holder transmits a PPDU to the AP, which is shown as receiving the PPDU and transmitting an ACK frame to TxOP holder.

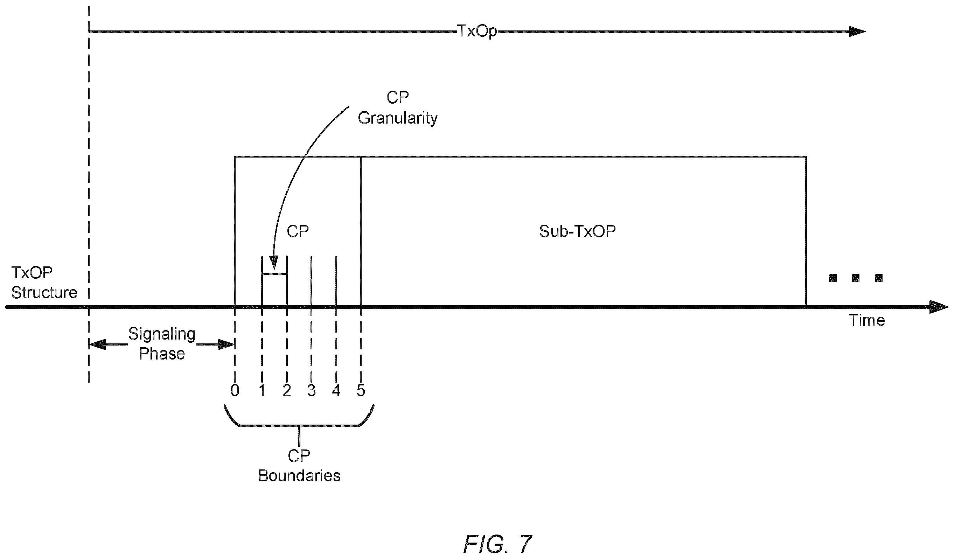

In some instances, a contention period (CP) preceding a sub-TxOP may use a distributed contention method. In such instances, the CP may be one or more contention period units, where a contention period unit may be referred to as a granularity of the CP, e.g., as illustrated by Figure 7. Thus, a CP duration may be determined by a product of the granularity and a scaling factor, n. In some instances, wireless stations, such as a wireless station 106 and/or an AP 112, may randomly select a value in a range [n_min, n_max], where a CP duration may be determined by a product of granularity and n_max. In some instances, n_min may be zero. The random value may determine when during a CP a wireless station may perform a CCA energy detection (ED) procedure. Further, when a CCA ED procedure detects an energy value is less than a threshold, the wireless station may decrease the value by 1 and pause counting down the value until a next CP (e.g., until the end of the sub-TxOP). Subsequently, when the decreased value reaches zero, the wireless station may assume it has gained access to the medium and begin transmission in the sub-TxOP, which may or may not coincide with an end of the CP. In other words, once the value reaches zero, the wireless station may begin transmission and is not required to wait until the end of the CP. Note that once the value reaches zero and the wireless station has gained medium access, the wireless station may then randomly select a new value in the range [n_min, n_max]. Note further, that upon transmission failure, the wireless station may randomly select a new value in the range of 2*[n_min, n_max]. In some instances, a participating AP may priority access by selecting a random value in a range of [n_min, n_max-1].

In some instances, a contention period (CP) duration may be less than a PIFS (e.g., less than 25 microseconds (µs) to mitigate against an overlapping basis service set (OBSS) AP taking over a current TxOP. In some instances, [n_min, n_max] may be based on a CP granularity, e.g., as shown in Table 1. In other instances, [n_min, n_max] may be and/or may also be a function of a number of wireless stations participating in the sub-TxOPs.

**Table 1: CP Size**

| Parameter | CP Granularity | | |
|---|---|---|---|
| | 4 µs | 6 µs | 9 µs |
| [n_min, n_max] | [0, 5] | [0, 3] | [0, 1] |

In some instances, a CP preceding a sub-TxOP may use a scheduled contention method. In such instances, the CP may be one or more contention period units, where a contention period unit may be referred to as a granularity of the CP, e.g., as illustrated by Figure 7. Thus, a CP duration may be determined by a product of the granularity and a scaling factor, n. In such instances, wireless devices participating in the TxOP may contend for a sub-TxOP based on a schedule assigned by a TxOP holder. For example, the TxOP holder may allocate, e.g., during a signaling phase, a value associated with a CP boundary to each wireless device participating in the TxOP, e.g., up to a value of n. Note that a CP boundary may be defined by the CP granularity and CP duration. For example, when n is set to a value of 5, then CP boundaries may include 0, 1, 2, 3, 4, and 5 with 0 coinciding with a start of the CP and 5 corresponding to an end of a CP, e.g., as illustrated by Figure 7. Thus, a wireless device assigned a lower value may attempt to access the medium prior to a device assigned a higher value. Further, a wireless device may commence transmission at its assigned CP boundary when a CCA ED procedure detects an energy value is less than a threshold. As an example, a first device may be assigned a value of 0, a second device may be assigned a value of 2, and a third device may be assigned a value of 4. Thus, the first device may perform a CCA ED procedure at CP boundary 0 and may commence transmission if the CCA ED procedure detects an energy value is less than a threshold. Similarly, the second device may perform a CCA ED procedure at CP boundary 2 and may commence transmission if the CCA ED procedure detects an energy value is less than the threshold (note that if the first device is transmitting, the CCA ED procedure will detect an energy value greater than the threshold). Further, the third device may a CCA ED procedure at CP boundary 4 and may commence transmission if the CCA ED procedure detects an energy value is less than the threshold (note that if the first device and/or the second device is transmitting, the CCA ED procedure will detect an energy value greater than the threshold).

As noted above, a signaling phase may include signaling to notify one or more wireless stations, such as an AP 112 and/or a wireless station, such as wireless station 106, of an opportunity to contend for sub-TxOPs during the TxOP of the TxOP holder. The signaling may include an indication that the TxOP includes sub-TxOPs (e.g., that the TxOP is a sub-TxOP system), information regarding contention for the sub-TxOP (e.g., such as a method for contention during a contention period (CP) preceding a sub-TxOP), identification of devices that can participate in the TxOP (e.g., that may contend for sub-TxOPs), a duration of a contention period (and/or contention phase), a type of contention (e.g., scheduled or distributed) and/or a duration of a sub-TxOP, among other information. In addition, the signaling may include an indication of n_min and/or n_max. Further, the signaling may include an indication and/or assignment of a CP boundary, an indication of assignments of CP boundaries for wireless devices participating in the TxOP, and/or a list of assignments of CP boundaries for wireless devices participating in the TxOP. In some instances, the signaling may be a management frame, such as a multi-user (MU) request-to-send (RTS) frame and/or a clear-to-send (CTS) frame.

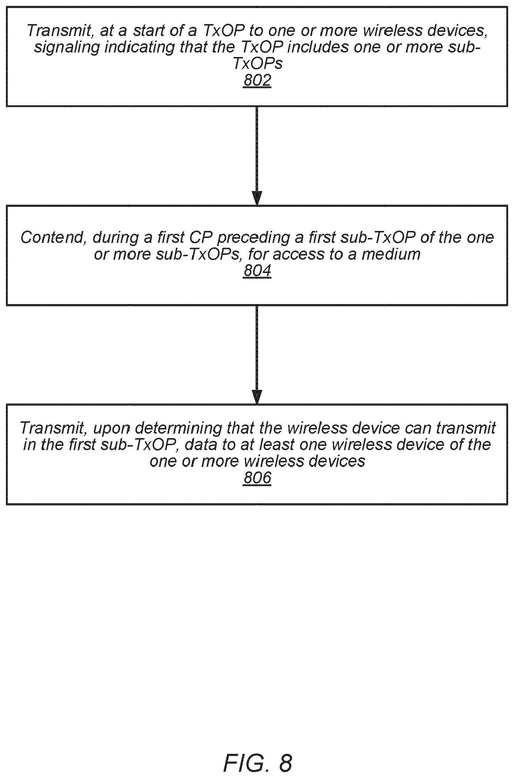

Figures 8, 9, 10, 11, 12, and 13 illustrate block diagrams of examples of methods for wireless communications, according to embodiments described herein. The methods shown in Figures 8, 9, 10, 11, 12, and 13 may be used in conjunction with any of the systems, methods, or devices shown in the Figures, among other devices. In various embodiments, some of the method elements shown may be performed concurrently, in a different order than shown, or may be omitted. Additional method elements may also be performed as desired.

Turning to Figure 8, as shown, this method may operate as follows.

At 802, a wireless device, such as a wireless station 106 and/or an access point 112, may transmit, at a start of a transmit opportunity (TxOP) to one or more wireless devices, signaling indicating that the TxOP includes one or more sub-TxOPs. In other words, an owner of a TxOP may transmit signaling to neighboring devices that the TxOP includes one or more sub-TxOPs. In some instances, the one or more wireless devices may include a first portion of wireless devices in communication range of the wireless device. In addition, a second portion of wireless devices in communication range of the wireless device may not participate in the TxOP, e.g., may not have been invited to participate in the TxOP. In some instances, the one or more wireless devices may include one or more of an access point, such as an access point 112, a wireless station operating as a high priority wireless station, such as a wireless station 106, and/or a wireless station not operating as a high priority wireless station, such as another wireless station 106. In some instances, the wireless device, as TxOP holder or owner, may be an access point, such as access point 112, and/or a wireless station that operates as a high priority wireless station, such as wireless station 106.

In some instances, the signaling indicating that the TxOP includes one or more sub-TxOPs may include any/all of a notification indicating an opportunity to contend for the one or more sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 804, the wireless device may contend, during a first contention period (CP) preceding a first sub-TxOP of the one or more sub-TxOPs, for access to a medium. In some instances, a duration of the first CP is based on a number of CP units included in the first CP. In some instances, a duration of the first CP may be less than a point coordination function (PCF) interframe space (PIFS). In some instances, to contend, during the first CP preceding the first sub-TxOP of the one or more sub-TxOPs, for access to the medium, the wireless device may contend for access to the medium using a distributed contention procedure. In some instances, to contend, during the first CP preceding the first sub-TxOP of the one or more sub-TxOPs, for access to the medium, the wireless device may contend for access to the medium using a scheduled contention procedure.

In some instances, to use the distributed contention procedure, the wireless device may randomly select a value in a range between [n_min, n_max] and perform, at a first point in time within the first CP, a clear channel assessment (CCA) energy detection procedure. The wireless device may determine, based on the value being zero, that the wireless device can transmit in the first sub-TxOP. In some instances, n_min and n_max may be indicated via the signaling. In some instances, the wireless device may determine, based one at least one of the value not being zero or the energy detected during the CCA energy detection procedure being less than the threshold, that the wireless device cannot transmit in the first sub-TxOP and decrease the value by one. Additionally, the wireless device may wait until a next CP to perform an additional CCA energy detection procedure. Further, the wireless device may continue to perform the sequence until the value becomes zero, an energy detected during a CCA energy detection procedure is greater than the threshold, and/or the TxOP ends. In some instances, the wireless device may determine a data transmission failure and randomly select a new value in a range between 2*[n_min, n_max]. In some instances, when the wireless device is an access point, the range may be adjusted to [n_min, n_max-1]. In some instances, the wireless device may determine the first point in time in the first CP based on a number of CP units included in the first CP and a duration of the first CP.

In some instances, to use the scheduled contention procedure, the wireless device may assign CP boundary values to the wireless device and each of the one or more wireless devices and perform, at a CP boundary value assigned to the wireless device, a CCA energy detection procedure. In some instances, the wireless device may determine, based on an energy detected during the CCA energy detection procedure being less than a threshold, that the wireless device can transmit and commence transmission. In some instances, the wireless device may determine, based on an energy detected during the CCA energy detection procedure being greater than a threshold, that the wireless device cannot transmit and wait until a next CP to perform an additional CCA energy detection procedure at the CP boundary value assigned to the wireless device. In some instances, the assigned CP boundary values may be included in the signaling.

At 806, the wireless device may transmit, upon determining that the wireless device can transmit in the first sub-TxOP, data to at least one wireless device of the one or more wireless devices. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

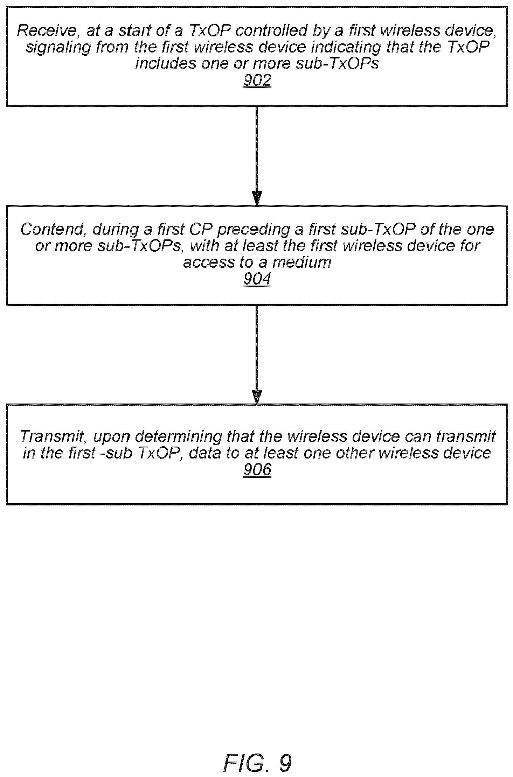

Turning to Figure 9, as shown, this method may operate as follows.

At 902, a wireless device, such as a wireless station 106 and/or an access point 112, may receive, at a start of a transmit opportunity (TxOP) controlled by a first wireless device, signaling from the first wireless device indicating that the TxOP includes one or more sub-TxOPs. In other words, an owner of a TxOP may transmit signaling to neighboring devices that the TxOP includes one or more sub-TxOPs. In some instances, the wireless device may be included in a first portion of wireless devices in communication range of the first wireless device. In addition, a second portion of wireless devices in communication range of the first wireless device may not participate in the TxOP, e.g., may not have been invited to participate in the TxOP. In some instances, the first wireless device may be an access point, such as an access point 112 and/or a wireless station operating as a high priority wireless station, such as a wireless station 106. In some instances, the wireless device, may be an access point, such as access point 112, and/or a wireless station that operates as a high priority wireless station, such as wireless station 106.

In some instances, the signaling indicating that the TxOP includes one or more sub-TxOPs may include any/all of a notification indicating an opportunity to contend for sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 904, the wireless device may contend, during a first contention period (CP) preceding a first sub-TxOP of the one or more sub-TxOPs, with at least the first wireless device for access to a medium. In some instances, a duration of the first CP is based on a number of CP units included in the first CP. In some instances, a duration of the first CP may be less than a point coordination function (PCF) interframe space (PIFS).

In some instances, to contend, during the first CP preceding the first sub-TxOP of the one or more sub-TxOPs, for access to the medium, the wireless device may contend for access to the medium using a distributed contention procedure. In some instances, to contend, during the first CP preceding the first sub-TxOP of the one or more sub-TxOPs, for access to the medium, the wireless device may contend for access to the medium using a scheduled contention procedure.

In some instances, to use the distributed contention procedure, the wireless device may randomly select a value in a range between [n_min, n_max] and perform, at a first point in time within the first CP, a clear channel assessment (CCA) energy detection procedure. The wireless device may determine, based on the value being zero, that the wireless device can transmit in the first sub-TxOP. In some instances, n_min and n_max may be indicated via the signaling. In some instances, the wireless device may determine, based one at least one of the value not being zero or the energy detected during the CCA energy detection procedure being less than the threshold, that the wireless device cannot transmit in the first sub-TxOP and decrease the value by one. Additionally, the wireless device may wait until a next CP to perform an additional CCA energy detection procedure. Further, the wireless device may continue to perform the sequence until the value becomes zero, an energy detected during a CCA energy detection procedure is greater than the threshold, and/or the TxOP ends. In some instances, the wireless device may determine a data transmission failure and randomly select a new value in a range between 2*[n_min, n_max]. In some instances, when the wireless device is an access point, the range may be adjusted to [n_min, n_max-1]. In some instances, the wireless device may determine the first point in time in the first CP based on a number of CP units included in the first CP and a duration of the first CP.

In some instances, to use the scheduled contention procedure, the wireless device may receive, from the first wireless device, an assignment of a CP boundary value and perform, at the assigned CP boundary value, a clear channel assessment (CCA) energy detection procedure. In some instances, the wireless device may determine, based on an energy detected during the CCA energy detection procedure being less than a threshold, that the wireless device can transmit and commence transmission. In some instances, the wireless device may determine, based on an energy detected during the CCA energy detection procedure being greater than a threshold, that the wireless device cannot transmit and wait until a next CP to perform an additional CCA energy detection procedure at the assigned CP boundary value. In some instances, the assigned CP boundary value may be included in the signaling.

At 906, the wireless device may transmit, upon determining that the wireless device can transmit in the first sub-TxOP, data to at least one other wireless device. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

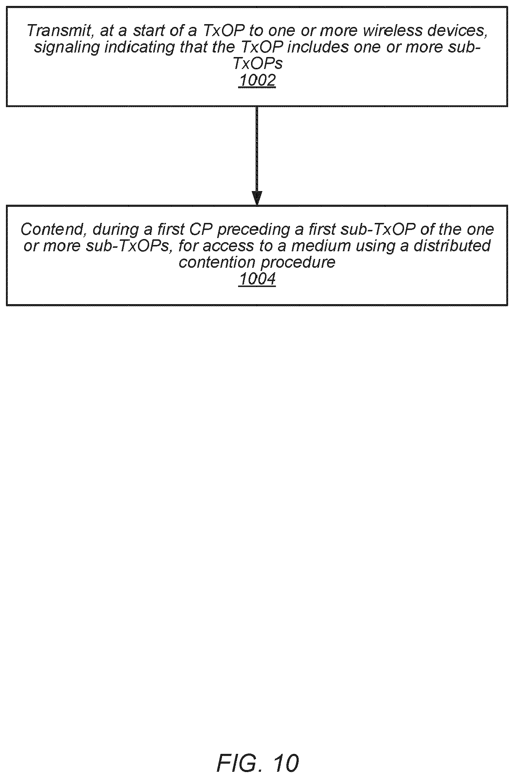

Turning to Figure 10, as shown, this method may operate as follows.

At 1002, a wireless device, such as a wireless station 106 and/or an access point 112, may transmit, at a start of a transmit opportunity (TxOP) to one or more wireless devices, signaling indicating that the TxOP includes one or more sub-TxOPs. In other words, an owner of a TxOP may transmit signaling to neighboring devices that the TxOP includes one or more sub-TxOPs. In some instances, the one or more wireless devices may include a first portion of wireless devices in communication range of the wireless device. In addition, a second portion of wireless devices in communication range of the wireless device may not participate in the TxOP, e.g., may not have been invited to participate in the TxOP. In some instances, the one or more wireless devices may include one or more of an access point, such as an access point 112, a wireless station operating as a high priority wireless station, such as a wireless station 106, and/or a wireless station not operating as a high priority wireless station, such as another wireless station 106. In some instances, the wireless device, as TxOP holder or owner, may be an access point, such as access point 112, and/or a wireless station that operates as a high priority wireless station, such as wireless station 106.

In some instances, the signaling indicating that the TxOP includes one or more sub-TxOPs may include a notification indicating an opportunity to contend for sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention) (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 1004, the wireless device may contend, during a first contention period (CP) preceding a first sub-TxOP of the one or more sub-TxOPs, for access to a medium using a distributed contention procedure. In some instances, a duration of the first CP is based on a number of CP units included in the first CP. In some instances, a duration of the first CP may be less than a point coordination function (PCF) interframe space (PIFS).

In some instances, to use the distributed contention procedure, the wireless device may randomly select a value in a range between [n_min, n_max] and perform, at a first point in time within the first CP, a clear channel assessment (CCA) energy detection procedure. The wireless device may determine, based on the value being zero, that the wireless device can transmit in the first sub-TxOP. In some instances, n_min and n_max may be indicated via the signaling. In some instances, the wireless device may determine, based one at least one of the value not being zero or the energy detected during the CCA energy detection procedure being less than the threshold, that the wireless device cannot transmit in the first sub-TxOP and decrease the value by one. Additionally, the wireless device may wait until a next CP to perform an additional CCA energy detection procedure. Further, the wireless device may continue to perform the sequence until the value becomes zero, an energy detected during a CCA energy detection procedure is greater than the threshold, and/or the TxOP ends. In some instances, the wireless device may determine a data transmission failure and randomly select a new value in a range between 2*[n_min, n_max]. In some instances, when the wireless device is an access point, the range may be adjusted to [n_min, n_max-1]. In some instances, the wireless device may determine the first point in time in the first CP based on a number of CP units included in the first CP and a duration of the first CP.

In some instances, the wireless device may transmit, upon determining that the wireless device can transmit in the first sub-TxOP, data to at least one wireless device of the one or more wireless devices. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

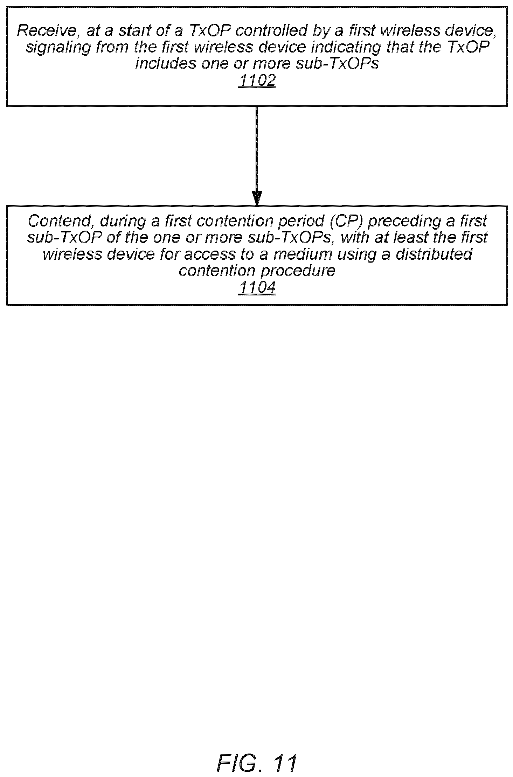

Turning to Figure 11, as shown, this method may operate as follows.

At 1102, a wireless device, such as a wireless station 106 and/or an access point 112, may receive, at a start of a transmit opportunity (TxOP) controlled by a first wireless device, signaling from the first wireless device indicating that the TxOP includes one or more sub-TxOPs. In other words, an owner of a TxOP may transmit signaling to neighboring devices that the TxOP includes one or more sub-TxOPs. In some instances, the wireless device may be included in a first portion of wireless devices in communication range of the first wireless device. In addition, a second portion of wireless devices in communication range of the first wireless device may not participate in the TxOP, e.g., may not have been invited to participate in the TxOP. In some instances, the first wireless device may be an access point, such as an access point 112 and/or a wireless station operating as a high priority wireless station, such as a wireless station 106. In some instances, the wireless device, may be an access point, such as access point 112, and/or a wireless station that operates as a high priority wireless station, such as wireless station 106.

In some instances, the signaling indicating that the TxOP includes one or more sub-TxOPs may include any/all of a notification indicating an opportunity to contend for the one or more sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 1104, the wireless device may contend, during a first contention period (CP) preceding a first sub-TxOP of the one or more sub-TxOPs, with at least the first wireless device for access to a medium with at least the first wireless device for access to a medium using a distributed contention procedure. In some instances, a duration of the first CP is based on a number of CP units included in the first CP. In some instances, a duration of the first CP may be less than a point coordination function (PCF) interframe space (PIFS).

In some instances, to use the distributed contention procedure, the wireless device may randomly select a value in a range between [n_min, n_max] and perform, at a first point in time within the first CP, a clear channel assessment (CCA) energy detection procedure. The wireless device may determine, based on the value being zero, that the wireless device can transmit in the first sub-TxOP. In some instances, n_min and n_max may be indicated via the signaling. In some instances, the wireless device may determine, based one at least one of the value not being zero or the energy detected during the CCA energy detection procedure being less than the threshold, that the wireless device cannot transmit in the first sub-TxOP and decrease the value by one. Additionally, the wireless device may wait until a next CP to perform an additional CCA energy detection procedure. Further, the wireless device may continue to perform the sequence until the value becomes zero, an energy detected during a CCA energy detection procedure is greater than the threshold, and/or the TxOP ends. In some instances, the wireless device may determine a data transmission failure and randomly select a new value in a range between 2*[n_min, n_max]. In some instances, when the wireless device is an access point, the range may be adjusted to [n_min, n_max-1]. In some instances, the wireless device may determine the first point in time in the first CP based on a number of CP units included in the first CP and a duration of the first CP.

In some instances, the wireless device may transmit, upon determining that the wireless device can transmit in the first sub-TxOP, data to at least one other wireless device. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

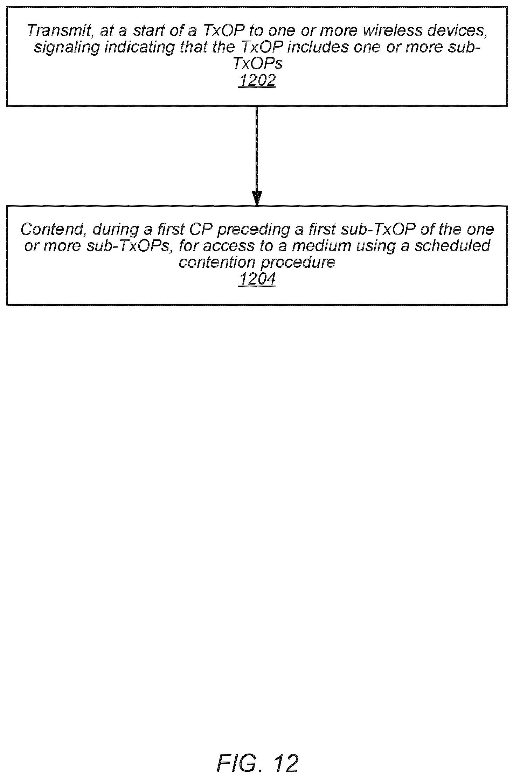

Turning to Figure 12, as shown, this method may operate as follows.

At 1202, a wireless device, such as a wireless station 106 and/or an access point 112, may transmit, at a start of a transmit opportunity (TxOP) to one or more wireless devices, signaling indicating that the TxOP includes one or more sub-TxOPs. In other words, an owner of a TxOP may transmit signaling to neighboring devices that the TxOP includes one or more sub-TxOPs. In some instances, the one or more wireless devices may include a first portion of wireless devices in communication range of the wireless device. In addition, a second portion of wireless devices in communication range of the wireless device may not participate in the TxOP, e.g., may not have been invited to participate in the TxOP. In some instances, the one or more wireless devices may include one or more of an access point, such as an access point 112, a wireless station operating as a high priority wireless station, such as a wireless station 106, and/or a wireless station not operating as a high priority wireless station, such as another wireless station 106. In some instances, the wireless device, as TxOP holder or owner, may be an access point, such as access point 112, and/or a wireless station that operates as a high priority wireless station, such as wireless station 106.

In some instances, the signaling indicating that the TxOP includes one or more sub-TxOPs may include a notification indicating an opportunity to contend for sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention) (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 1204, the wireless device may contend, during a first contention period (CP) preceding a first sub-TxOP of the one or more sub-TxOPs, for access to a medium using a scheduled contention procedure. In some instances, a duration of the first CP is based on a number of CP units included in the first CP. In some instances, a duration of the first CP may be less than a point coordination function (PCF) interframe space (PIFS).

In some instances, to use the scheduled contention procedure, the wireless device may assign CP boundary values to the wireless device and each of the one or more wireless devices and perform, at a CP boundary value assigned to the wireless device, a CCA energy detection procedure. In some instances, the wireless device may determine, based on an energy detected during the CCA energy detection procedure being less than a threshold, that the wireless device can transmit and commence transmission. In some instances, the wireless device may determine, based on an energy detected during the CCA energy detection procedure being greater than a threshold, that the wireless device cannot transmit and wait until a next CP to perform an additional CCA energy detection procedure at the CP boundary value assigned to the wireless device. In some instances, the assigned CP boundary values may be included in the signaling.

In some instances, the wireless device may transmit, upon determining that the wireless device can transmit in the first sub-TxOP, data to at least one wireless device of the one or more wireless devices. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

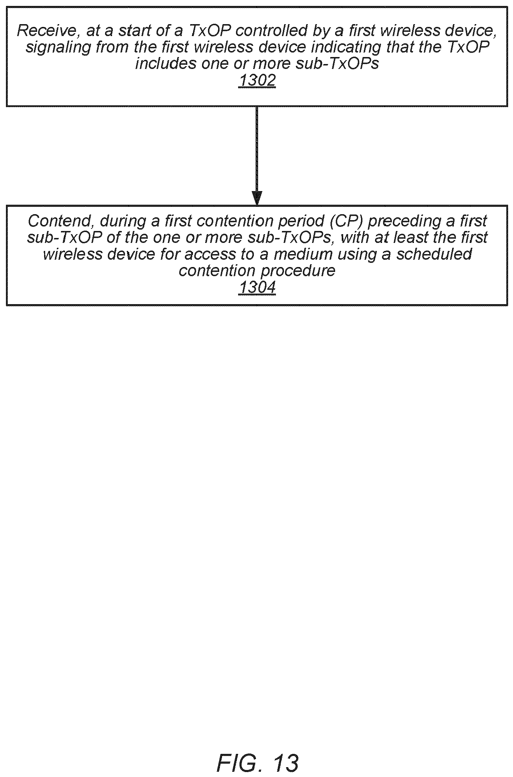

Turning to Figure 13, as shown, this method may operate as follows.

At 1302, a wireless device, such as a wireless station 106 and/or an access point 112, may receive, at a start of a transmit opportunity (TxOP) controlled by a first wireless device, signaling from the first wireless device indicating that the TxOP includes one or more sub-TxOPs. In other words, an owner of a TxOP may transmit signaling to neighboring devices that the TxOP includes one or more sub-TxOPs. In some instances, the wireless device may be included in a first portion of wireless devices in communication range of the first wireless device. In addition, a second portion of wireless devices in communication range of the first wireless device may not participate in the TxOP, e.g., may not have been invited to participate in the TxOP. In some instances, the first wireless device may be an access point, such as an access point 112 and/or a wireless station operating as a high priority wireless station, such as a wireless station 106. In some instances, the wireless device, may be an access point, such as access point 112, and/or a wireless station that operates as a high priority wireless station, such as wireless station 106.

In some instances, the signaling indicating that the TxOP includes one or more sub-TxOPs may include any/all of a notification indicating an opportunity to contend for the one or more sub-TxOPs during the TxOP, an indication that the TxOP includes the one or more sub-TxOPs, an indication that the TxOP comprises a sub-TxOP system, information associated with contention for the one or more sub-TxOPs (e.g., such as a type of contention), an indication or an identification of wireless devices that can participate in the TxOP, an indication of a duration of a contention period, and/or a duration of a sub-TxOP. In some instances, the signaling indicating that the TxOP includes one or more sub-TxOPs may be a management frame such as a multi-user request-to-send (MU-RTS) frame and/or a clear-to-send (CTS) frame.

At 1304, the wireless device may contend, during a first contention period (CP) preceding a first sub-TxOP of the one or more sub-TxOPs, with at least the first wireless device for access to a medium with at least the first wireless device for access to a medium using a scheduled contention procedure. In some instances, a duration of the first CP is based on a number of CP units included in the first CP. In some instances, a duration of the first CP may be less than a point coordination function (PCF) interframe space (PIFS).

In some instances, to use the scheduled contention procedure, the wireless device may receive, from the first wireless device, an assignment of a CP boundary value and perform, at the assigned CP boundary value, a clear channel assessment (CCA) energy detection procedure. In some instances, the wireless device may determine, based on an energy detected during the CCA energy detection procedure being less than a threshold, that the wireless device can transmit and commence transmission. In some instances, the wireless device may determine, based on an energy detected during the CCA energy detection procedure being greater than a threshold, that the wireless device cannot transmit and wait until a next CP to perform an additional CCA energy detection procedure at the assigned CP boundary value. In some instances, the assigned CP boundary value may be included in the signaling.

In some instances, the wireless device may transmit, upon determining that the wireless device can transmit in the first sub-TxOP, data to at least one other wireless device. In other words, the wireless device, upon winning and/or gaining access to the medium via the contention, may transmit data in the first sub-TxOP. In some instances, the data may include a single user (SU) physical layer protocol data unit (PPDU), a multi-user (MU) PPDU, and/or a trigger frame to solicit a trigger based (TB) PPDU from the at least one wireless device. In some instances, the data includes padding at an end of the first sub-TxOP to avoid an airtime gap greater than a point coordination function (PCF) interframe space (PIFS).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device may be configured to include a processor (or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for wireless communication, comprising:
a wireless device (104, 106),
transmitting (802), at a start of a transmit opportunity, TxOP, to one or more wireless devices (104, 106), signaling indicating that the TxOP includes one or more sub-TxOPs;
contending (804), during a first contention period, CP, preceding a first sub-TxOP of the one or more sub-TxOPs, for access to a medium; and
transmitting (806), upon determining that the wireless device (104, 106) can transmit in the first sub-TxOP, data to at least one wireless device (104, 106) of the one or more wireless devices (104, 106).

2. The method of claim 1,
wherein the one or more wireless devices (104, 106) comprises a first portion of wireless devices (104, 106) in communication range of the wireless device (104, 106); and
wherein a second portion of wireless devices (104, 106) in communication range of the wireless device (104, 106) do not participate in the TxOP.

3. The method of any of claims 1-2,
wherein the one or more wireless devices (104, 106) comprise one or more of:
an access point (104);
a wireless station (106) operating as a high priority wireless station (106); or a wireless station (106) not operating as a high priority wireless station (106).

4. The method of any of claims 1-3,
wherein the wireless device (104, 106) comprises one of an access point (104) or a wireless station (106) that operates as a high priority wireless station (106).

5. The method of any of claims 1-4,
wherein the signaling indicating that the TxOP includes one or more sub-TxOPs comprises at least one of:
a notification indicating an opportunity to contend for sub-TxOPs during the TxOP;
an indication that the TxOP includes the one or more sub-TxOPs;
an indication that the TxOP comprises a sub-TxOP system;
information associated with contention for the one or more sub-TxOPs;
an indication or an identification of wireless devices that can participate in the TxOP;
an indication of a duration of a contention period; and/or
a duration of a sub-TxOP.

6. The method of any of claims 1-5,
wherein the signaling indicating that the TxOP includes one or more sub-TxOPs comprises at least one of:
a multi-user request-to-send, MU-RTS, frame; or
a clear-to-send, CTS, frame.

7. The method of any of claims 1-6,
wherein the data comprises at least one of:
a single user, SU, physical layer protocol data unit, PPDU;
a multi-user, MU, PPDU; or
a trigger frame to solicit a trigger based, TB, PPDU from the at least one wireless device.

8. The method of any of claims 1-7,
wherein the data includes padding at an end of the first sub-TxOP to avoid an airtime gap greater than a point coordination function, PCF, interframe space, PIFS.

9. The method of any of claims 1-8,
wherein a duration of the first CP is based on a number of CP units included in the first CP.

10. The method of any of claims 1-9,
wherein a duration of the first CP is less than a point coordination function, PCF, interframe space, PIFS.

11. The method of any of claims 1-10,
wherein contending, during the first CP preceding the first sub-TxOP of the one or more sub-TxOPs, for access to the medium comprises the wireless device contending for access to the medium using a distributed contention procedure; and
wherein using the distributed contention procedure comprises the wireless device (104, 106):
randomly selecting a value in a range between [n_min, n_max], wherein n_min and n_max are indicated via the signaling;
performing, at a first point in time within the first CP, a clear channel assessment, CCA, energy detection procedure; and
determining, based on the value being zero, that the wireless device can transmit in the first sub-TxOP.

12. The method of claim 11, further comprising:
the wireless device (104, 106),
determining, based one at least one of the value not being zero or the energy detected during the CCA energy detection procedure being less than the threshold, that the wireless device cannot transmit in the first sub-TxOP;
decreasing the value by one; and
waiting until a next CP to perform an additional CCA energy detection procedure.

13. The method of any of claims 11-12, further comprising:
the wireless device (104, 106),
determining a data transmission failure; and
randomly selecting a new value in a range, wherein, when the wireless device (104, 106) is not an access point (104), the range is between 2*[n_min, n_max], and wherein, when the wireless device (104, 106) is an access point (104), the range is adjusted to [n_min, n_max-1].

14. An apparatus (381), comprising:
a memory; and
processing circuitry in communication with the memory and configured to cause a wireless device (104, 106) to perform a method according to any of claims 1 to 13.

15. A non-transitory computer readable memory medium storing program instructions that, when executed, cause a processing circuitry of a wireless device (104, 106) to implement a method according to any of claims 1 to 13.
